**Europäisches Patentamt**

**European Patent Office**

**Office européen des brevets**

(11) Veröffentlichungsnummer: **0 400 164**

**A1**

## (12) EUROPÄISCHE PATENTANMELDUNG

(21) Anmeldenummer: **89109717.2**

(22) Anmeldetag: **30.05.89**

(51) Int. Cl.⁵: **G11B 5/58, //G11B5/584**

(43) Veröffentlichungstag der Anmeldung:
**05.12.90 Patentblatt 90/49**

(84) Benannte Vertragsstaaten:
**DE GB**

(71) Anmelder: **TANDBERG DATA A/S**
**Kjelsasveien 161 Postboks 9 Korsvoll**
**N-0808 Oslo 8(NO)**

(72) Erfinder: **Solhjell, Erik**
**Konvallveien 30**
**N-00855 Oslo 8(NO)**
Erfinder: **Christie, Nicolai W.**
**Kongsvingergt. 9E**
**N-0464 Oslo 4(NO)**

(74) Vertreter: **Fuchs, Franz-Josef, Dr.-Ing. et al**
**Postfach 22 13 17**
**D-8000 München 22(DE)**

(54) **Verfahren und Anordunung zum Positionieren eines Magnetkopfs bei einem Magnetschichtspeicher.**

(57) Zum genauen Positionieren eines Magnetkopfs (1) auf eine Spur (35) eines bewegten Aufzeichnungsträgers (2) in einem Magnetschichtspeicher, insbesondere einem Magnetbandgerät, bei dem der Magnetkopf (1) in Querrichtung des Aufzeichnungsträgers (2) auf verschiedene Spuren verschiebbar ist, werden Signale jeweils in Spuren (35) aufgezeichnet, die aus zwei durch einen schmalen Zwischenraum voneinander getrennten Teilspuren (33, 34) gebildet werden. Hierzu ist ein Schreibkopf (30) vorgesehen, der zwei durch einen Zwischenraum (36) voneinander getrennte Teilschreibköpfe (31, 32) enthält. Die Signale werden durch zwei in einem Lesekopf (40) vorgesehene Teilleseköpfe (41, 42) von den Teilspuren (33, 34) gelesen, wobei die jeweiligen Teilleseköpfe (41, 42) in Querrichtung des Aufzeichnungsträgers (2) schmaler ausgebildet sind als die jeweiligen Teilspuren (33, 34). In Abhängigkeit von Lesesignalen (S3) der beiden Teilleseköpfe (41, 42) wird der Magnetkopf (1) in Querrichtung des Aufzeichnungsträgers (2) derart verschoben, daß er der Spur (35) möglichst genau folgt.

# FIG 2

## Verfahren und Anordnung zum Positionieren eines Magnetkopfs bei einem Magnetschichtspeicher

Die Erfindung bezieht sich auf ein Verfahren zum genauen Positionieren eines Magnetkopfs auf mindestens eine Spur eines bewegten Aufzeichnungsträgers, gemäß dem Oberbegriff des Patentanspruchs 1. Weiterhin bezieht sich die Erfindung auf eine Anordnung zur Durchführung des Verfahrens.

Bei einer Aufzeichnung von Signalen, insbesondere Daten, auf einem bewegten Aufzeichnungsträger in einem Magnetschichtspeicher ist es allgemein bekannt, einen Magnetkopf zu verwenden, der mindestens einen Schreibkopf und mindestens einen Lesekopf enthält. Der Speicher kann beispielsweise als ein Magnetbandgerät, ein Magnetplattenspeicher oder ein Diskettenspeicher ausgebildet sein. Die Daten werden mittels des Schreibkopfs auf einer oder mehreren Spuren des Aufzeichnungsträgers, beispielsweise eines Magnetbands, einer Magnetplatte oder einer Diskette aufgezeichnet und mittels des Lesekopfs gelesen.

Bei einer Aufzeichnung von Daten mit einer hohen Speicherdichte in mehreren parallelen Spuren ist es wichtig, einerseits die zu speichernde Datenmenge in Längsrichtung der Spuren und andererseits die Anzahl der Spuren auf dem Aufzeichnungsträger zu erhöhen. Zu diesem Zweck ist es bekannt, einen Magnetkopf mit einem oder nur wenigen Schreibköpfen und einem oder nur wenigen Leseköpfen zu verwenden und dann den Magnetkopf derart zu positionieren, daß ein Schreibkopf und/oder ein Lesekopf auf eine jeweils gewünschte Spur genau zu liegen kommt.

Ein Verfahren und eine Anordnung zum genauen Positionieren eines Magnetkopfs auf verschiedene Spuren eines Aufzeichnungsträgers ist beispielsweise aus DE 36 44 005 Al bekannt. Bei diesem bekannten Verfahren wird zum Positionieren eines senkrecht zur Laufrichtung des Aufzeichnungsträgers verschiebbaren Magnetkopfs für jede Spur ein Positionswert und gegebenenfalls ein Korrekturwert ermittelt, die gemeinsam einer Steuereinrichtung zugeführt werden. Diese erzeugt daraus Steuersignale für eine Einrichtung zum Verschieben des Magnetkopfs. Dieses bekannte Verfahren führt eine Steuerung des Magnetkopfs in Abhängigkeit von den Positionswerten und den zugehörigen Korrekturwerten durch. Eine Regelung der Positionierung ist bei diesem Verfahren nicht vorgesehen.

DE 26 27 002 Al offenbart eine Anordnung zur Regelung der Spurlage eines Magnetkopfs auf einer Spur eines bewegten Aufzeichnungsträgers. Bei dieser bekannten Anordnung ist in dem Magnetkopf ein magnetoresistiver Lesekopf vorgesehen, der breiter als die Spur ausgebildet ist. Der Lesekopf enthält eine Mittenanzapfung und aus der Differenz von Ausgangssignalen der beiden durch die Mittenanzapfung gebildeten Hälften des Lesekopfs wird ein Steuersignal für eine Verschiebung des Magnetkopfs senkrecht zur Bewegungsrichtung des Aufzeichnungsträgers erzeugt. Bei dieser bekannten Anordnung ist somit ein magnetoresistiver Lesekopf erforderlich, der bei üblichen Magnetköpfen normalerweise nicht zur Verfügung steht.

Der Erfindung liegt die Aufgabe zugrunde, ein Verfahren und eine Anordnung zum genauen Positionieren eines Magnetkopfs auf eine Spur eines bewegten Aufzeichnungsträgers anzugeben, bei denen ein Magnetkopf üblicher Technologie einsetzbar ist und die dennoch eine sehr genaue Regelung der Position des Magnetkopfs relativ zu einer Spur mit geringem Aufwand ermöglichen.

Erfindungsgemäß wird die Aufgabe bei dem Verfahren und der Anordnung der eingangs genannten Art durch die in den kennzeichnenden Teilen der Patentansprüche 1 bzw. 9 angegebenen Merkmale gelöst.

Das Verfahren gemäß der Erfindung hat den Vorteil, daß infolge der Regelung die Position des Schreibkopfs und des Lesekopfs dynamisch an alle Schwankungen der Spurlage angepaßt wird und daß alle Abweichungen von einer Sollage dynamisch ausgeregelt werden. Die Position muß nur grob vorgegeben werden und die Feineinstellung wird selbsttätig vorgenommen.

Für die Erzeugung von Steuersignalen zum Verschieben des Magnetkopfs senkrecht zur Bewegungsrichtung des Aufzeichnungsträgers wird die Differenz aus Ausgangssignalen der beiden Teileseköpfe gebildet. Die Ausgangssignale können zu diesem Zweck vor oder nach der Differenzbildung integriert werden. Es ist auch zweckmäßig, die Ausgangssignale vor oder nach der Differenzbildung gleichzurichten.

Eine Anordnung zur Durchführung des Verfahrens enthält einen Magnetkopf mit mindestens einem Schreibkopf zum Aufzeichnen von Signalen auf dem Aufzeichnungsträger und mindestens einen Lesekopf zum Lesen der aufgezeichneten Daten vom Aufzeichnungsträger, sowie eine Steuereinrichtung, unter deren Verwendung der Magnetkopf senkrecht zur Bewegungsrichtung des Aufzeichnungsträgers verschiebbar ist. Der Schreibkopf weist zwei Teilschreibköpfe auf, die in einer Richtung senkrecht zur Bewegungsrichtung des Aufzeichnungsträgers unter Bildung eines schmalen Zwischenraums angeordnet sind und die die Daten in zwei Teilspuren auf dem Aufzeichnungsträger aufzeichnen. Der Lesekopf weist zwei Teileseköpfe auf, die ebenfalls in der Richtung senkrecht zur Bewegungsrichtung des Aufzeichnungsträgers unter Bildung eines schmalen Zwischenraums angeordnet sind und die in dieser Richtung schmaler ausgebildet sind als die beiden Teilschreibköpfe. Die Steuereinrichtung erzeugt aus den Ausgangssignalen der beiden Teilleseköpfe Steuersignale für die Verschiebung des Magnetkopfs senkrecht zur Bewegungsrichtung des Aufzeichnungsträgers.

Der Zwischenraum zwischen den Teilschreibköpfen kann genauso groß wie oder größer sein als der Zwischenraum zwischen den Teilleseköpfen.

Falls in der Anordnung ein Magnetkopf für eine mehrspurige Aufzeichnung mit mehr als einem Magnetkopfsystem vorgesehen ist, kann ein über einer bestimmten Spur positionierter Lesekopf entweder dazu verwendet werden, Daten auf derselben Spur mittels des dieser Spur zugeordneten Schreibkopfs oder auf einer anderen Spur mittels eines dieser anderen Spur zugeordneten Schreibkopfs aufzuzeichnen. Aufgrund der Geometrie des Mehrspurkopfs ist sichergestellt, daß die andere Spur immer einen konstanten Abstand zu der ursprünglichen Spur aufweist, auf der der Lesekopf positioniert ist.

Das Verfahren und die Anordnung gemäß der Erfindung werden im folgenden anhand eines Ausführungsbeispiels der Anordnung zusammen mit der Zeichnung näher erläutert. Es zeigen:

FIG 1 ein Blockbild eines Teils eines als Magnetbandgerät ausgebildeten magnetomotorischen Speichers,

FIG 2 eine schematische Darstellung einer Aufzeichnung von Signalen auf einer Spur eines Aufzeichnungsträgers,

FIG 3 eine Darstellung von integrierten Ausgangssignalen von Teilleseköpfen bei einer Verschiebung über Teilspuren,

FIG 4 ein Blockschaltbild einer Anordnung zur Erzeugung von Steuersignalen,

FIG 5 eine schematische Darstellung einer Aufzeichnung von Signalen auf mehreren Spuren eines Aufzeichnungsträgers.

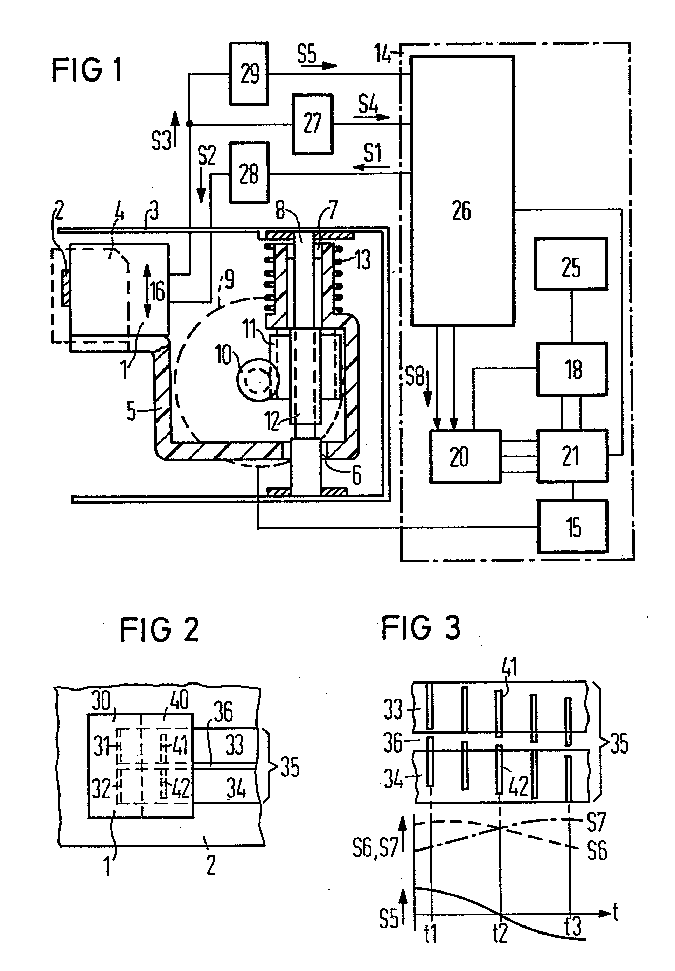

In FIG 1 ist als Ausführungsform für ein schematisch dargestelltes Magnetbandgerät ein Kassetten-Magnetbandgerät ausgewählt. Ein derartiges Magnetbandgerät ist beispielsweise aus US-A-4,622,606 oder US-A-4,609,959 bekannt und daher hier nur zusammenfassend erläutert. In einem Gehäuse 3 des Magnetbandgeräts sind eine nicht dargestellte Antriebsanordnung für ein als Aufzeichnungsträger dienendes Magnetband 2 und eine Positio nieranordnung für einen Magnetkopf 1 angeordnet. Eine gestrichelt dargestellte Magnetbandkassette 4 mit dem Magnetband 2 ist in das Magnetbandgerät einsetzbar. Der Magnetkopf 1 greift während des Betriebs des Magnetbandgeräts in eine Öffnung der Magnetbandkassette ein, um mit dem Magnetband 2 in Berührung zu kommen. Der Magnetkopf 1 ist auf einem Kopfträger 5 befestigt und zum Zweck der Positionierung gemeinsam mit diesem unter Verwendung von zwei Lagern 6 und 7 längs einer Achse 8 in Querrichtung des Magnetbands 2, d. h. senkrecht zu dessen Bewegungsrichtung verschiebbar, wie es durch einen Doppelpfeil 16 dargestellt ist.

Die Verschiebung des Magnetkopfs 1 erfolgt durch einen Elektromotor 9, der vorzugsweise als Schrittmotor ausgebildet ist, jedoch auch als Gleichstrommotor ausgebildet sein kann. Auf der Achse des Motors 9 ist eine Schnecke 10 befestigt, die mit einem Schneckenrad 11 in Wirkverbindung steht. Die Achse 8 weist im Bereich des Schneckenrads 11 ein Außengewinde 12 auf, das mit einem Innengewinde des Schneckenrads 10 zusammenwirkt. Der Elektromotor 9 treibt über die Schnecke 10 das Schneckenrad 11 an und bewegt dieses in axialer Richtung längs der Achse 8. Eine Druckfeder 13 drückt den Kopfträger 5 gegen das Schneckenrad 11, so daß jener der Bewegung des Schneckenrads 11 in axialer Richtung folgt und damit den Magnetkopf 1 auf verschiedene Spuren des Magnetbands 2 positioniert. Während der Bewegung des Kopfträgers 5 in axialer Richtung ist seine Radialbewegung blockiert. So wird verhindert, daß er sich zusammen mit dem Schneckenrad 11 drehen kann. Für das Einschieben oder das Herausnehmen der Magnetbandkassette 4 ist der Magnetkopf 1 jedoch gemeinsam mit dem Kopfträger 5 aus dieser Arbeitsstellung in eine Ruhestellung schwenkbar.

In einer Steuereinrichtung 14 ist eine Motorsteuerung 15 vorgesehen, die den Motor 9 über Steuersignale ansteuert, die beispielsweise als Schrittimpulse ausgebildet sind, falls der Motor 9 ein Schrittmotor ist. Die Motorsteuerung 15 wird von einem Impulsgeber 21 angesteuert, der beim Positionieren eines Schreibkopfs oder eines Lesekopfs des Magnetkopfs 1 auf eine bestimmte Spur des Magnetbands 2 Steuersignale empfängt, um den Magnetkopf 1 von einer bestimmten Spur als Istposition auf eine andere Spur als Sollposition zu verschieben. Eine derartige Positioniereinrichtung ist allgemein bekannt und beispielsweise US-PS 4,313,141 zu entnehmen.

Eine bestimmte Spur, auf die der Schreibkopf oder der Lesekopf positioniert werden soll, wird von einer zentralen Steuereinheit des Magnetbandgeräts oder - wie im Beispiel von FIG 1 -von einer als Mikrorechner ausgebildeten Steuereinheit 26 mitgeteilt. Die Istposition, in der sich der Magnetkopf 1 jeweils befindet, ist in einem Speicher 18 gespeichert, könnte aber ebenfalls im Mikrorechner 26 gespeichert sein.

Zu Beginn des Betriebs des Magnetbandgeräts wird der Magnetkopf 1 in eine Bezugsposition gebracht, die durch einen Bezugspositionsgeber 25 ermittelt wird. Dieses Bezugsposition ist beispielsweise eine Kante des Magnetbands 2, die beispielsweise durch ein aus DE 31 12 886 Al bekanntes Verfahren ermittelt wird. Die Bezugsposition kann aber auch eine erste, beispielsweise äußere oder mittlere Spur des Magnetbands 2 sein oder - wie in US-PS 4,313,141 beschrieben ist - eine bestimmte Stellung der Positioniereinrichtung sein, die mittels einer Lichtschranke erkannt wird. Diese Bezugsposition ist dann die erste Istposition bei Inbetriebnahme und wird im Speicher 18 gespeichert.

Die Steuereinheit 26 enthält einen Zuordner, der für jede der durch eine bestimmte Spurnummer gekennzeichneten Spuren den Soll-Positionswert der jeweiligen Spur aufweist. Der vom Zuordner abgegebene Soll-Positionswert und der vom Speicher 18 abgegebene Ist-Positionswert werden einem Vergleicher 20 zugeführt, der aus der Differenz zwischen dem Soll- und dem Ist-Positionswert die Abweichung hinsichtlich des Betrags und der Richtung ermittelt. Er veranlaßt den Impulsgeber 21, an die Motorsteuerung 15 solange Impulse für den Schrittmotor 9 abzugeben, bis der Soll-Positionswert mit dem Ist-Positionswert übereinstimmt. Der Magnetkopf 1 wird damit unter Verwendung des Motors 9 auf die gewünschte Spur positioniert. Gleichzeitig werden die Impulse dem Speicher 18 zugeführt, so daß dieser die neue Istposition beinhaltet. Der Speicher 18 kann zu diesem Zweck einen Addierer enthalten, der von der neuen Istposition jeweils die entsprechende Anzahl von Impulsen subtrahiert oder zu dieser hinzuaddiert. Er kann auch als Zähler ausgebildet sein, dessen Zählerstand die jeweilige Istposition angibt und der durch die vom Impulsgeber 21 abgegebenen Impulse jeweils aufwärts oder abwärts gezählt wird.

Wie bereits erwähnt, kann der Motor 9 auch ein Gleichstrommotor sein. Zur genauen Positionierung kann dann auf der Achse des Gleichstrommotors eine Taktscheibe mit einer Vielzahl von Markierungen angeordnet sein, die durch optoelektronische Elemente abgetastet werden. In diesem Fall gibt der Impulsgeber 21 solange Signale ab, bis eine vorgegebene Anzahl von Taktimpulsen abgetastet wurde, die der Differenz zwischen der Soll- und der Istposition entspricht.

Die Steuereinheit 26 dient auch dazu, die Position des Magnetkopfs 1 immer derart zu steuern, daß ein Schreibkopf oder ein Lesekopf immer genau auf einer gewünschten Spur zu liegen kommen. Zu diesem Zweck ist sie auch Teil eines Regelkreises, der den Motor 9 immer entsprechend steuert.

Wie bereits erwähnt, wird zu Beginn des Betriebs des Magnetbandgeräts der Magnetkopf 1 in der oben beschriebenen Weise in die Bezugsposition gebracht. Ausgehend von dieser Bezugsposition wird der Magnetkopf 1 in die einer ersten Spur zugeordnete Position gebracht und Daten werden in dieser Spur auf dem Magnetband 2 aufgezeichnet.

Wie in FIG 2 schematisch gezeigt ist, enthält der Magnetkopf 1 mindestens einen Schreibkopf 30 und mindestens einen Lesekopf 40. Der Schreibkopf 30 besteht aus zwei Teilschreibköpfen 31 und 32, die in Querrichtung des Magnetbands 2, durch einen schmalen Zwischenraum 36 voneinander getrennt, hintereinander angeordnet sind. Beim Aufzeichnen der Daten gibt die Steuereinheit 26 Schreibsignale S1 ab und führt sie über einen Schreibverstärker 28 gleichzeitig den beiden Teilschreibköpfen 31 und 32 zu. Dadurch werden die Daten in zwei Teilspuren 33 und 34 einer Spur 35 des Magnetbands 2 aufgezeichnet. Die den beiden Teilschreibköpfen 31, 32 zugeführten Signale sind vorzugsweise identisch, so daß die Daten in gleicher Weise aufgezeichnet werden. Es ist jedoch auch möglich, den beiden Teilschreibköpfen 31, 32 gegenphasige Signale zuzuführen. Die beiden Teilschreibköpfe 31 und 32 sind dann vorzugsweise gleich groß und gleich empfindlich.

Beim Lesen der in den Teilspuren 33 und 34 aufgezeichneten Daten wird der Lesekopf 40, gegebenenfalls nach einem Rückspulen des Magnetbands 2, auf die Spur 35 positioniert. Der Lesekopf 40 enthält zwei Teilseseköpfe 41 und 42, die ebenfalls in der Querrichtung des Magnetbands 2 hintereinander angeordnet sind und durch einen Zwischenraum voneinander getrennt sind, der gleich dem Zwischenraum 36, aber auch davon verschieden, insbesondere kleiner sein kann. Unter Verwendung der Teileseköpfe 41 und 42 werden die Daten von den Teilspuren 33 und 34 gelesen, und es werden Lesesignale S3 erzeugt, die in einem Leseverstärker 27 verstärkt werden und als verstärkte Lesesignale S4 an die Steuereinheit 26 zur weiteren Auswertung abgegeben werden. Die Teileseköpfe 41 und 42 dienen jedoch auch dazu, die Lage des Lesekopfs 40 auf der Spur 35 genau zu regeln. Zu diesem Zweck werden die Lesesignale S3 außerdem einer Auswertestufe 29 zugeführt, die Steuersignale S5 an die Steuereinheit 26 abgibt. Mit diesen Steuersignalen S5 wird die Lage des Lesekopfs 40 derart geregelt, daß der symmetrisch zum Zwischenraum 36 über den Teilspuren 33 und 34 positioniert ist.

FIG 3 erläutert schematisch den Zusammenhang zwischen einer Verschiebung des Lesekopfes 40 quer zur Spurrichtung und den Ausgangssignalen der Auswertestufe 29. In Abszissenrichtung ist die Zeit t und in Ordinatenrichtung sind die integrierten Momentanwerte von gleichgerichteten Lesesignalen S6 und S7 der Lesesignale S3 der beiden Teileseköpfe 41 und 42 und die Steuersignale S5 dargestellt, die aus der Differenz der gleichgerichteten Lesesignale S6 und S7 nach einer Integration gebildet werden.

Zu einem Zeitpunkt t1 ist der Lesekopf 40 zu weit nach oben verschoben und die integrierten Lesesignale S6 des Teillesekopfs 41 sind größer als diejenigen des Teillesekopfs 42. Die Steuersignale S5 weisen daher einen positiven Wert auf. Zum Zeitpunkt t2 befindet sich der Lesekopf 40 genau über der Spur 35, d. h. die Teilleseköpfe 41 und 42 sind symmetrisch zu dem Zwischenraum 36 angeordnet. Die gleichgerichteten Lesesignale S6 bzw. S7 heben sich auf und die Steuersignale S5 haben den Wert 0. Zum Zeitpunkt t3 ist der Lesekopf 40 nach unten verschoben und die gleichgerichteten Lesesignale S7 des Teillesekopfs 42 sind größer als die gleichgerichteten Lesesignale S6 des Teillesekopfs 41, so daß die Steuersignale S5 einen negativen Wert aufweisen.

Die Steuereinheit 26 erzeugt aus den Steuersignalen S5 Regelsignale S8 und gibt diese an den Vergleicher 20 ab, um den Motor 9 derart zu verstellen, daß der Lesekopf 40 immer möglichst genau über der Spur 35, also symmetrisch zum Zwischenraum 36, zu liegen kommt, d. h. die für den Zeitpunkt t2 dargestellte Position einnimmt.

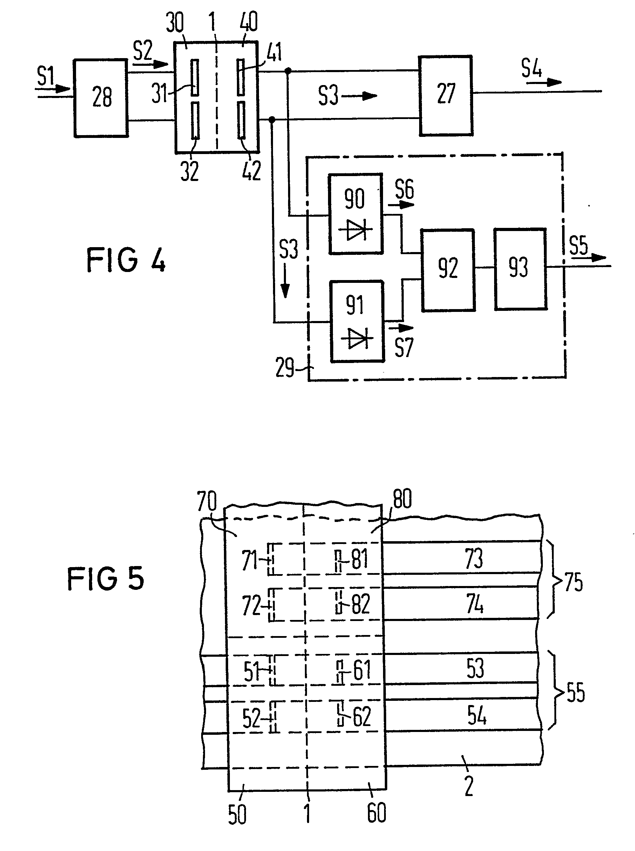

In FIG 4 sind Einzelheiten der Auswertestufe 29 dargestellt, um die Ermittlung der Steuersignale S5 zu erläutern. Bei der Aufzeichnung der Daten gibt die Steuereinheit 26 die Schreibsignale S1 über den Schreibverstärker 28 als verstärkte Schreibsignale S2 an die beiden Teilschreibköpfe 31 und 32 ab und die Daten werden auf dem Magnetband 2 aufgezeichnet. Beim Lesen der Daten vom Magnetband 2 geben die beiden Teilleseköpfe 41 und 42 die Lesesignale S3 ab, die über den Leseverstärker 27 als verstärkte Lesesignale S4 an die Steuereinheit 26 abgegeben werden. Zu diesem Zweck werden die beiden Teilleseköpfe 41 und 42 hintereinander geschaltet. Die Lesesignale S3 werden auch der Auswertestufe 29 zugeführt. Die Auswertestufe 29 enthält zwei Gleichrichter 90 und 91, die die Lesesignale S3 der jeweiligen Teilleseköpfe 41 und 42 gleichrichten und die gleichgerichteten Lesesignale S6 und S7 abgeben. Ein Summierglied 92 bildet die Differenz der gleichgerichteten Lesesignale S6 und S7. Dem Summierglied 92 ist ein Integrierglied 93 nachgeschaltet, das die Steuersignale S5 erzeugt, die an die Steuereinheit 26 abgegeben werden.

Diese erzeugt dann die Regelsignale S8 für die Verstellung des Motors 9, so daß die Teilleseköpfe 41 und 42 möglichst symmetrisch über den Teilspuren 33 und 34 zu liegen kommen. Es ist auch möglich, den Gleichrichtern 90 und 91 jeweils ein Integrierglied nachzuschalten. In diesem Fall erhält man die in FIG 3 verwendeten gleichgerichteten und integrierten Lesesignale S6 und S7. Das Integrierglied 93 ist dann nicht unbedingt erforderlich.

Wie in FIG 5 gezeigt, kann die Anordnung gemäß der Erfindung auch dazu verwendet werden, einen Schreibkopf auf eine andere Spur zu positionieren. Hierzu ist ein Mehrspurkopf 1 mit zwei Schreibköpfen 50 und 70 und zwei Leseköpfen 60 und 80 vorgesehen. Die Schreibköpfe 50 und 70 enthalten jeweils Teilschreibköpfe 51 und 52 bzw. 71 und 72 und die Leseköpfe 60 und 80 enthalten jeweils Teilleseköpfe 61 und 62 bzw. 81 und 82. Es wird angenommen, daß auf dem Magnetband 2 bereits eine Spur 55 aufgezeichnet ist und nun eine weitere Spur 75 aufgezeichnet werden soll. Entsprechend der obigen Erläuterung zu der Darstellung in FIG 2 wird der Lesekopf 60 auf diese Spur 55 positioniert. Die Lesesignale S3 werden für die Erzeugung der Steuersignale S5 verarbeitet, um die Position des Lesekopfs 60 über der Spur 55 zu regeln. Vorgegeben durch die Geometrie des Mehrspurkopfs liegt dann der Schreibkopf 70 über der Spur 75. Damit können gleichzeitig auf die Spur 75 neue Daten in Teilspuren 73 und 74 durch die Teilschreibköpfe 71 und 72 des Schreibkopfs 70 aufgezeichnet werden. Auf diese Weise ist sichergestellt, daß die Spur 75 immer in einem vorgegebenen Abstand der Spur 55 folgt.

Außerdem kann der Abstand zwischen benachbarten Spuren sehr klein gemacht werden und damit die Aufzeichnungsdichte auf dem Magnetband 2 wesentlich erhöht werden. Hierbei kann mit Vorteil der Abstand zwischen den Schreibköpfen 50 und 70 bzw. zwischen den Leseköpfen 60 und 80 dem doppelten Spurabstand entsprechend gewählt werden. Geht man dann wie oben beschrieben vor, so wird jeweils die übernächste Spur aufgezeichnet oder von dieser gelesen.

Wie unmittelbar einzusehen, laufen beim Lesen der Daten von der Spur 75 unter Verwendung des Lesekopfs 80 mit den Teilleseköpfen 81 und 82 ähnliche Vorgänge ab, wie sie im Zusammenhang mit dem Lesen der Daten mittels des Lesekopfs 40 oben beschrieben wurden, so daß sich hierzu eine weitere Detailschilderung erübrigt.

**Ansprüche**

1. Verfahren zum Positionieren eines Magnetkopfs (1) auf eine Spur (35) eines bewegten Aufzeichnungsträgers (2) in einem Magnetschichtspeicher, bei dem unter Verwendung mindestens eines im Magnetkopf (1) vorgesehenen Schreibkopfs (30) Signale auf dem Aufzeichnungsträger (2) aufgezeichnet und unter Verwendung mindestens eines im Magnetkopf (1) vorgesehenen Lesekopfs (40) Signale vom Aufzeichnungsträger (2) gelesen werden, **dadurch gekennzeichnet,** daß die Spur (35) aus zwei parallelen Teilspuren (33, 34) gebildet wird, auf denen die Signale durch zwei im Schreibkopf (30) vorgesehene, durch einen Zwischenraum (36) voneinander getrennte Teilschreibköpfe (31, 32) auf dem Aufzeichnungsträger (2) aufgezeichnet werden, daß die Signale durch zwei im Lesekopf (40) vorgesehene Teilleseköpfe (41, 42) von den Teilspuren (33, 34) gelesen werden, wobei die jeweiligen Teilleseköpfe (41, 42) in Querrichtung des Aufzeichnungsträgers (2) schmaler ausgebildet sind als die jeweiligen Teilspuren (33, 34), und daß der Magnetkopf (1) in Abhängigkeit von Lesesignalen (S3) der beiden Teilleseköpfe (41, 42) in Querrichtung des Aufzeichnungsträgers (2) derart verschoben wird, daß er der Spur (35) möglichst genau folgt.

2. Verfahren nach Anspruch 1, **dadurch gekennzeichnet,** daß die Signale auf zwei gleich breiten Teilspuren (33, 34) aufgezeichnet werden und daß der Magnetkopf (1) in Abhängigkeit von der Differenz der Lesesignale (S3) aus den beiden Teilspuren verschoben wird.

3. Verfahren nach Anspruch 1 oder Anspruch 2, **dadurch gekennzeichnet,** daß die Signale auf den beiden Teilspuren (33, 34) jeweils in gleicher Weise aufgezeichnet werden.

4. Verfahren nach einem der Ansprüche 1 bis 3, bei dem die Signale auf mehreren Spuren (55, 75) des Aufzeichnungsträgers (2) unter Verwendung eines Mehrspurkopfs mit einer Mehrzahl von Schreibköpfen (50, 70) und einer Mehrzahl von Leseköpfen (60, 80), **dadurch gekennzeichnet,** daß einer der Leseköpfe (60) auf einer ersten Spur (55) unter Verwendung der Lesesignale (S3) seiner Teilleseköpfe (61, 62) positioniert wird und daß gleichzeitig Signale auf einer weiteren Spur (75) durch einen dieser weiteren Spur (75) zugeordneten Schreibkopf (70) aufgezeichnet werden.

5. Verfahren nach einem der Ansprüche 1 bis 4, **dadurch gekennzeichnet,** daß die jeweiligen Lesesignale (S3) der einzelnen Teilleseköpfe (41, 42 bzw. 61, 62) gleichgerichtet, integriert und dann voneinander subtrahiert werden.

6. Verfahren nach einem der Ansprüche 1 bis 5, **dadurch gekennzeichnet,** daß die jeweiligen Lesesignale (S3) der einzelnen Teilleseköpfe (41, 42 bzw. 61, 62) gleichgerichtet, voneinander subtrahiert und dann integriert werden.

7. Verfahren nach einem der Ansprüche 1 bis 6, **dadurch gekennzeichnet,** daß der Magnetschichtspeicher als Magnetbandgerät ausgebildet ist und daß mit den Signalen Daten auf ein Magnetband (2) aufgezeichnet werden.

8. Anordnung zum Positionieren eines Magnetkopfs (1) auf einer Spur (35) eines bewegten Aufzeichnungsträgers (2) in einem Magnetschichtspeicher, wobei der Magnetkopf (1) mindestens einen Schreibkopf (30) zum Aufzeichnen von Signalen auf den Aufzeichnungsträger (2) und mindestens einen Lesekopf (40) zum Lesen der aufgezeichneten Signale vom Aufzeichnungsträger (40) enthält und wobei der Magnetschichtspeicher eine Steuereinrichtung (14) zum Verschieben des Magnetkopfs in Querrichtung des Aufzeichnungsträgers aufweist. **dadurch gekennzeichnet,** daß der Schreibkopf (30) zwei Teilschreibköpfe (31, 32) enthält, die in Querrichtung des Aufzeichnungsträgers (2) unter Bildung eines schmalen Zwischenraums (36) angeordnet sind und die die Signale in einer aus zwei Teilspuren (33, 34) gebildeten Spur (35) auf dem Aufzeichnungsträger (2) aufzeichnen. daß der einer Spur (35) zugeordnete Lesekopf (40) zwei Teilleseköpfe (41, 42) enthält, die ebenfalls in Querrichtung des Aufzeichnungsträgers (2) unter Bildung eines schmalen Zwischenraums (36) angeordnet sind, die in dieser Richtung jeweils schmaler ausgebildet sind als die entsprechenden Teilschreibköpfe (31, 32) und die die Signale von den Teilspuren (33, 34) lesen, und daß die Steuereinrichtung (14) aus Lesesignalen (S3) der beiden Teilleseköpfe (41, 42) Steuersignale (S8) für die Verschiebung des Magnetkopfs (1) in Querrichtung des Aufzeichnungsträgers erzeugt.

9. Anordnung nach Anspruch 8. **dadurch gekenn zeichnet,** daß die zwischen den Teilschreibköpfen (31, 32) und den Teilleseköpfen (41, 42) gebildeten Zwischenräume (36) gleich groß sind.

10. Anordnung nach Anspruch 8 oder Anspruch 9, **dadurch gekennzeichnet,** daß die Zwischenräume (36) jeweils in der Mitte der Spur (35) angeordnet sind.

11. Anordnung nach einem der Ansprüche 8 bis 10, **dadurch gekennzeichnet,** daß die Teilschreibköpfe (31, 32) in der Richtung senkrecht zur Bewegungsrichtung des Aufzeichnungsträgers (2) gleich lang sind.

12. Anordnung nach einem der Ansprüche 8 bis 11, **dadurch gekennzeichnet,** daß die Teilleseköpfe (41, 42) in der Querrichtung des Aufzeichnungsträgers (2) gleich lang sind.

13. Anordnung nach einem der Ansprüche 8 bis 12, **dadurch gekennzeichnet,** daß ein Summierglied (92) vorgesehen ist, das für die Erzeugung der Steuersignale (S8) die Differenz aus den Lesesignalen (S3) der Teilleseköpfe (41, 42) bildet.

14. Anordnung nach Anspruch 13, **dadurch gekennzeichnet,** daß dem Summierglied (92) Gleichrichter (90, 91) vorgeschaltet sind, die für die Erzeugung der Steuersignale (S8) die Ausgangssignale (S3) der Teilleseköpfe (41, 42) gleichrichten.

15. Anordnung nach Anspruch 13 oder Anspruch 14, **dadurch gekennzeichnet,** daß dem Summierglied (92) Integrierglieder vorgeschaltet sind, die die Lesesignale (S3) der Teilleseköpfe (41, 42) integrieren.

16. Anordnung nach einem der Ansprüche 13 bis 15, **dadurch gekennzeichnet,** daß dem Summierglied (92) ein Integrierglied (93) nachgeschaltet ist.

17. Anordnung nach einem der Ansprüche 8 bis 16, **dadurch gekennzeichnet,** daß als Magnetschichtspeicher ein Magnetbandgerät vorgesehen ist, das als Signale Daten auf einem Magnetband (2) aufzeichnet.

18. Anordnung nach einem der Ansprüche 8 bis 17, bei der der Magnetkopf (1) als ein Mehrspurkopf mit einer Mehrzahl von Schreibköpfen (50, 70) und einer Mehrzahl von Leseköpfen (60, 80) ausgebildet ist, **dadurch gekennzeichnet,** daß die Position eines Lesekopfs (60) bezüglich einer Spur (55) mittels der aus dieser Spur gelesenen und in Steuersignale (S8) umgesetzten Lesesignale (S3) regelbar ist und daß Daten auf einer anderen Spur (75) mittels eines dieser anderen Spur durch die geometrische Ausgestaltung des Mehrspurkopfs zugeordneten Schreibkopfs (70) aufzeichenbar sind.

**FIG 1**

**FIG 2**

**FIG 3**

FIG 4

FIG 5

Europäisches
Patentamt

**EUROPÄISCHER RECHERCHENBERICHT**

Nummer der Anmeldung

EP    89 10 9717
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | US-A-4525750 (HAMALAINEN) <br> * Spalte 1, Zeilen 56 - 64 * <br> * Spalte 2, Zeile 5 - Spalte 3, Zeile 57; Figuren 1, 2 * | 1-3, 8 | G11B5/58 <br> //G11B5/584 |
| A | | 5, 7, 9-10, 12-15, 17 | |
| | --- | | |
| Y | PATENT ABSTRACTS OF JAPAN <br> vol. 11, no. 109 (P-564)(2556) 7 April 1987, <br> & JP-A-61 258326 (HITACHI) 15 November 1986, <br> * das ganze Dokument * | 1-3, 8 | |
| A | | 7, 10-11 | |
| | --- | | |
| A | PATENT ABSTRACTS OF JAPAN <br> vol. 10, no. 274 (P-498)(2330) 18 September 1986, <br> & JP-A-61 96576 (NEC CORPORATION) 15 Mai 1986, <br> * das ganze Dokument * | 1-3, 7-13, 17 | |
| | --- | | **RECHERCHIERTE SACHGEBIETE (Int. Cl.5 )** |
| A | PATENT ABSTRACTS OF JAPAN <br> vol. 9, no. 259 (P-397)(1982) 17 Oktober 1985, <br> & JP-A-60 107724 (SANYO DENKI K.K.) 13 Juni 1985, <br> * das ganze Dokument * | 1-2, 8, 10-13, 17 | G11B |
| | --- | | |
| A | PATENT ABSTRACTS OF JAPAN <br> vol. 12, no. 334 (P-756)(3181) 8 September 1988, <br> & JP-A-63 96716 (SANKYO SEIKI MFG) 27 April 1988, <br> * das ganze Dokument * | 1-2, 5, 7-8, 12-15, 17 | |
| | --- | | |
| | -/-- | | |

Der vorliegende Recherchenbericht wurde für alle Patentansprüche erstellt

| Recherchenort | Abschlußdatum der Recherche | Prüfer |
|---|---|---|
| DEN HAAG | 30 JANUAR 1990 | CALARASANU |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-4164764 (JOANNOU)<br>* Spalte 3, Zeilen 20 - 24 *<br><br><br>* Spalte 4, Zeilen 12 - 36 *<br>* Spalte 6, Zeilen 39 - 60 *<br>* Spalte 7, Zeilen 1 - 11 *<br>* Spalte 8, Zeilen 1 - 39 *<br>* Spalte 10, Zeilen 16 - 62 *<br>* Spalte 11, Zeilen 27 - 60; Figuren 1-11 *<br>--- | 1-4,<br>7-8,<br>10-12,<br>17-18 | |
| A | PATENT ABSTRACTS OF JAPAN<br>vol. 12, no. 417 (P-782)(3264) 7 November 1988,<br>& JP-A-63 155413 (NEC CORPORATION) 28 Juni 1988,<br>* das ganze Dokument *<br>----- | 1-3,<br>7-12 | |
| | | | RECHERCHIERTE SACHGEBIETE (Int. Cl.5 ) |

Der vorliegende Recherchenbericht wurde für alle Patentansprüche erstellt

| Recherchenort | Abschlußdatum der Recherche | Prüfer |
|---|---|---|
| DEN HAAG | 30 JANUAR 1990 | CALARASANU |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)